# FASCICULE DE BREVET EUROPEEN

(11) **EP 1 436 526 B1**
(45) Date de publication et mention de la délivrance du brevet: **06.04.2005**
(21) Numéro de dépôt: 02790497.8
(22) Date de dépôt: 16.09.2002
(51) Int. Cl.: F16H 1/28, F16H 57/08, F02N 15/04

(54) **COURONNE DE REDUCTEUR DU TYPE A TRAIN EPICYCLOIDAL NOTAMMENT POUR DEMARREUR DE VEHICULE AUTOMOBILE**
HOHLRAD FÜR PLANETENGETRIEBEUNTERSETZUNG FÜR KRAFTFAHRZEUGSTARTER
PLANETARY GEARSET REDUCTION RING GEAR FOR MOTOR VEHICLE STARTER

(30) Priorité: 14.09.2001 FR 0111927
(43) Date de publication de la demande: 14.07.2004
(73) Titulaire: VALEO EQUIPEMENTS ELECTRIQUES MOTEUR, 94017 Creteil Cedex (FR)
(72) Inventeur: LIU, Zeng, Gang, F-78780 Maurecourt (FR)
(86) Numéro de dépôt international: PCT/FR2002/003138
(87) Numéro de publication internationale: WO 2003/025424

(56) Documents cités:
- WO-A-99/18369
- FR-A- 2 592 450

## Description

L'invention concerne une couronne de réducteur du type à train épicycloïdal, notamment pour démarreurs de véhicule automobile, montée immobile en rotation dans un carter et comprenant une denture intérieure qu'engrènent les roues satellites du réducteur, et un démarreur comportant une telle couronne de réducteur.

### Etat de la technique

Il est connu d'utiliser dans des démarreurs pour véhicules automobiles des couronnes en acier dans des cas d'application impliquant des contraintes très sévères. Or, une couronne en acier fritté présente l'inconvénient majeur, s'ajoutant à son coût très cher, qu'elle présente une certaine fragilité. On a alors envisagé d'utiliser des couronnes en acier forgé. Ces couronnes se sont avérées satisfaisantes quant à leurs propriétés mécaniques, mais leur utilisation se heurte à un coût beaucoup trop élevé, c'est-à-dire plus de deux fois et demi de celui d'une couronne en acier fritté.

### Objet de l'invention

La présente invention a pour but de pallier cet inconvénient et de proposer une couronne d'un coût de fabrication et d'outillage réduit.

Pour atteindre ce but, une couronne de réducteur selon l'invention est caractérisée en ce qu'elle est réalisée sous forme d'une couronne multiparties, chaque partie pouvant être fabriquée séparément.

Selon une caractéristique de l'invention, la couronne se compose de deux parties, une partie extérieure montée dans le carter de la machine qu'elle équipe et une partie de couronne intérieure portant la denture intérieure et qui est susceptible d'être montée coaxialement dans la partie de couronne extérieure et est formée par plusieurs segments de couronne séparés.

Selon une autre caractéristique de l'invention, chaque segment de couronne comporte sur sa surface périphérique extérieure des nervures de butée destinées à se caler dans des évidements complémentaires prévus sur la partie de couronne extérieure.

Selon une autre caractéristique de l'invention, chaque nervure de butée de segment de couronne est reçue dans un amortisseur faisant partie de la partie de couronne extérieure.

Selon encore une autre caractéristique de l'invention, une nervure de butée de segment de couronne est reçue entre deux blocs en un matériau d'amortissement, calés entre deux butées de la partie de couronne extérieure.

Selon encore une autre caractéristique de l'invention, la couronne intérieure est réalisée avantageusement en deux ou quatre segments.

Le démarreur selon l'invention est caractérisé en ce qu'il comporte une couronne de réducteur comportant les caractéristiques susmentionnés.

### Description sommaire des dessins

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la Figure 1 est une vue en coupe axiale partielle d'un démarreur du type à réducteur à train épicycloïdal selon l'état de la technique,
- les Figures 2 et 3 sont des vues en perspective de deux versions de réalisation d'une couronne de réducteur selon l'invention.

### Description de modes de réalisation préférentiels de l'invention

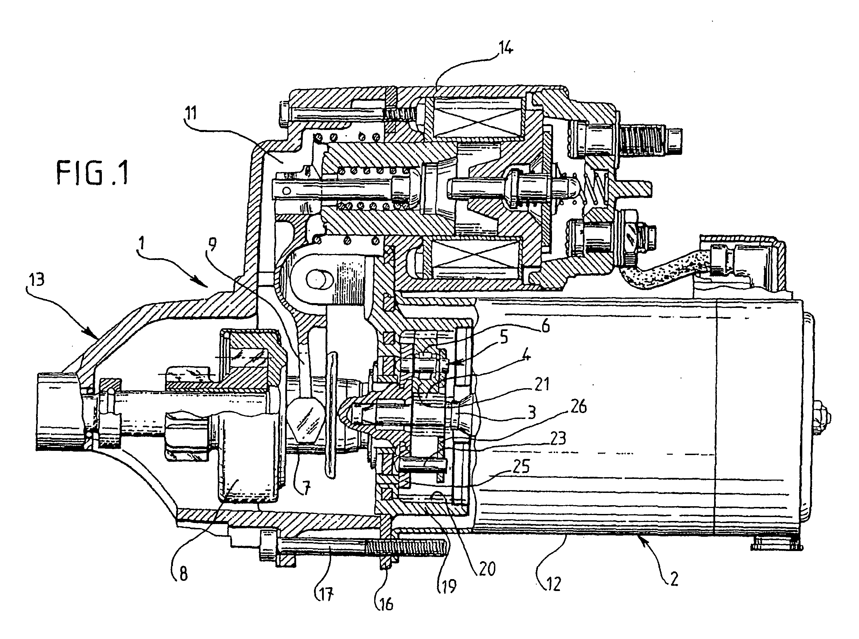

En se référant à la Figure 1 on décrira tout d'abord un démarreur 1 de véhicule automobile du type à train épicycloïdal, de l'état de la technique, pour démontrer la structure générale d'un démarreur à laquelle est incorporé le dispositif de couronne de réducteur selon l'invention.

Selon la figure 1, un démarreur connu 1 comporte un moteur électrique 2 comprenant un induit qui entraîne un arbre 3 portant, à son extrémité libre, un pignon 4. Un réducteur 5 à train épicycloïdal 6 est interposé entre le pignon 4 et un arbre de lanceur 7 coaxial à l'arbre de sortie 3 du moteur électrique 2, le lanceur 8 étant déplaçable sur l'arbre 7 par l'intermédiaire d'un levier 9 en forme de fourche d'un contacteur électromagnétique 11 disposé dans la partie supérieure du démarreur. Le moteur électrique 2 et le réducteur sont enfermés dans une carcasse 12 à laquelle est fixée une partie avant en forme de capot 13 sur laquelle est également monté le carter 14 du contacteur 11.

Le réducteur 5 comporte une plaque de base 16 fixée sur la carcasse 12 et le carter 14, par des vis 17 de fixation du capot 13 sur la carcasse 12 et le carter 14, et une couronne 19 surmoulée sur la plaque 16 dans le démarreur représenté.

La couronne 19 comporte une denture intérieure 20 qu'engrène les roues satellites 21 du train épicycloïdal 6. Les satellites sont montés sur des axes 23 portés par un plateau porte-satellites 25 solidaire en rotation de l'arbre de lanceur 7 et immobilisé axialement en translation par une plaque 26 emmanchée à force sur les axes de satellites 23.

L'invention concerne spécifiquement la réalisation de la couronne de réducteur d'un démarreur du type représenté sur la Figure 1.

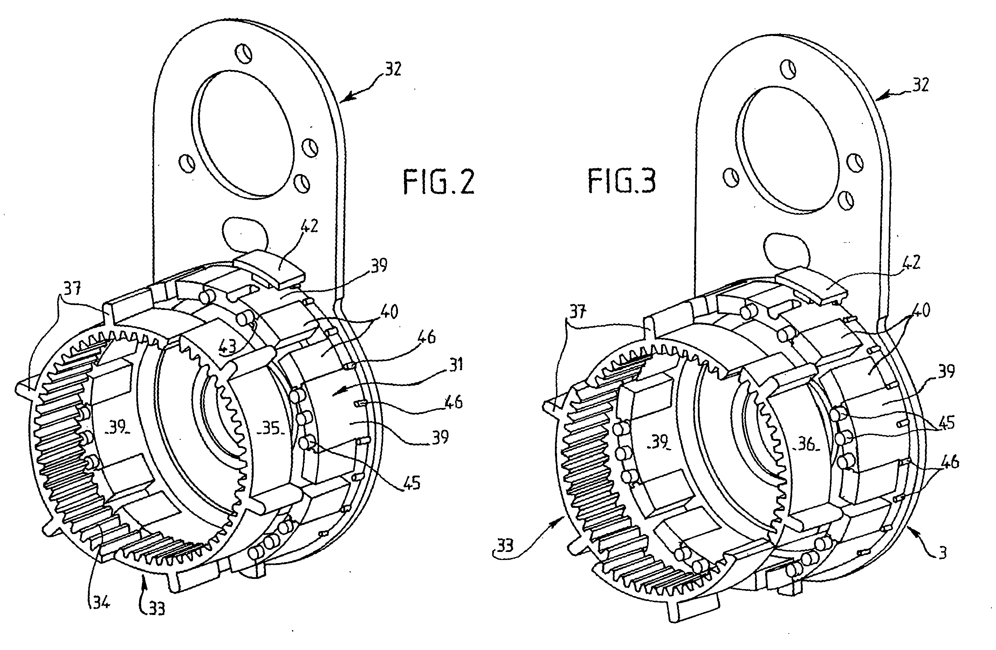

Comme le montre les figures 2 et 3, une couronne selon l'invention comporte une première partie désignée par la référence 31 qui est destinée à être montée fixe dans le démarreur et se compose d'une partie cylindrique formant boîtier 31 solidaire d'une plaque 32 correspondant à la plaque 16 du démarreur connu représenté sur la Figure 1 et une partie de couronne intérieure 33 qui porte la denture intérieure 34 et est susceptible d'être coaxialement montée dans le boîtier 31.

Comme le montre les figures 2 et 3, la couronne intérieure 33 se compose dans la version de réalisation de la figure 2 de deux segments annulaires semi-cylindrique 35 et, dans la version sur la figure 3, de quatre segments annulaires 36 chacun en forme d'un arc cercle de 90°, chaque segment étant avantageusement réalisé en fer forgé.

Chaque segment de couronne 35 de la Figure 2 comporte, sur sa face périphérique extérieure, trois nervures de butée 37 qui font saillie radialement vers l'extérieur et sont destinées à assurer le montage et la fixation, coaxialement, dans le boîtier de couronne 31.

Cette dernière comporte, à cette fin, un nombre de segments 39, chacun en forme d'un arc de cercle, faisant axialement saillie de la plaque de base 32, qui est égal au nombre total des nervures de butée 37. Les segments de boîtier 39 sont répartis de façon angulairement équidistante et dimensionnés de façon à permettre l'interposition entre deux segments 39 de deux blocs amortisseurs 40 en tout matériau approprié tel que du caoutchouc, qui sont disposés de façon à laisser entre eux un écart dans lequel s'insère une nervure de butée de segment 37 de la couronne interne 32. Les segments 39 sont avantageusement en matière plastique et surmoulés ou clipsés sur la plaque de base 32. Les blocs amortisseurs 40 sont surmoulés sur le support 39 ou fixés avec ceux-ci par un dispositif à nervure et rainure comme on le voit en 43 sur les figures 2 et 3. En 42 on a indiqué un élément d'indexage culasse.

La version de réalisation de la couronne selon l'invention représentée sur la Figure 3 se distingue de la version de la Figure 2 seulement par les faits qu'il y a quatre segments et que chaque segment de couronne intérieure 36 comporte au moins une nervure de butée du type de la nervure 37 de la figure 2.

Il est encore à noter que des plots 45 font axialement saillie de la face frontale libre des segments 39 pour obtenir un espace d'expansion pour les blocs amortisseurs 40. Une plaque cache-poussière non représentée vient en appui contre les segments 39 pour éviter que des poussières pénètrent dans le réducteur et des grains sortent de celui-ci. Les figures indiquent en outre en 46 des plots de centrage de la culasse notamment dans sa version monobloc avec des segments 39.

La couronne multiparties selon l'invention, telle que représentée sur les Figures 2 et 3 permet d'équilibrer la force des satellites du réducteur dans le cas de chocs qu'en cas de l'entraînement normal. Les blocs amortisseurs réduisent à la fois les chocs torsionnels et radiaux. La couronne multiparties selon l'invention est applicable sur tous les démarreurs à réducteurs où une couronne en matière plastique ne satisfait pas aux contraintes de charge au niveau de l'usure et du risque de rupture des dents et où les couronnes en acier mono-partie sont trop chères en coût de production et d'outillages.

## Revendications

1. Couronne de réducteur du type à train épicycloïdal, notamment pour démarreurs de véhicule automobile, montée immobile en rotation dans un carter et comprenant une denture intérieure qu'engrène les roues satellites du réducteur, **caractérisée en ce qu'**elle se compose de deux parties, une partie extérieure (31) montée dans ledit carter et une partie de couronne intérieure (33) portant la denture intérieure, qui est susceptible d'être montée coaxialement dans la partie de couronne extérieure (31) et est formée par plusieurs segments de couronne (35, 36) séparés.

2. Couronne de réducteur selon la revendication 1, **caractérisée en ce que** chaque segment de couronne (35, 36) comporte sur sa face périphérique extérieure au moins une nervure de butée (37) destinées à se caler dans des évidements complémentaires prévues sur la partie de couronne extérieure (31).

3. Couronne de réducteur selon la revendication 2, **caractérisée en ce que** chaque nervure de butée (37) de segment de couronne (35,36) est reçue dans un amortisseur (40) faisant partie de la partie de couronne extérieure (31).

4. Couronne de réducteur selon la revendication 3, **caractérisée en ce qu'**une nervure de butée (37) de segment de couronne (35,36) est reçue entre deux blocs (40) en un matériau d'amortissement, calés entre deux butées (39) de la partie de couronne extérieure (31).

5. Couronne de réducteur selon la revendication 1, **caractérisée en ce que** la couronne intérieure (33) est réalisée en deux segments (35) ou quatre segments (36) d'une étendue angulaire égale.

6. Couronne de réducteur selon la revendication 1, **caractérisée en ce que** chaque segment des couronnes (35, 36) est réalisé en acier forgé.

7. Couronne de réducteur selon la revendication 4, **caractérisée en ce que** chaque butée comporte des plots (45) axialement en saillie sur sa surface frontale libre, destinés à établir un espace d'expansion des blocs amortisseurs (40).

8. Démarreur de véhicule automobile du type à réducteur à train épicycloïdal comportant une couronne à denture intérieure montée immobile en rotation dans la carcasse du réducteur, **caractérisé par** ladite couronne de réducteur selon l'une des revendications 1 à 6.

## Patentansprüche

1. Hohlrad eines Untersetzungsgetriebes in der Ausführung als Planetengetriebe, insbesondere für Kraftfahrzeuganlasser, das drehfest in einem Gehäuse gelagert ist und eine Innenzahnung umfaßt, in die die Planetenräder des Untersetzungsgetriebes eingreifen,
**dadurch gekennzeichnet, daß** es sich aus zwei Teilen zusammensetzt, aus einem äußeren Teil (31), der in dem besagten Gehäuse eingebaut ist, und einem inneren Hohlradteil (33), der die Innenzahnung trägt und der koaxial in den äußeren Hohlradteil (31) eingesetzt werden kann und aus mehreren getrennten Hohlradsegmenten (35, 36) besteht.

2. Hohlrad eines Untersetzungsgetriebes nach Anspruch 1,
**dadurch gekennzeichnet, daß** jedes Hohlradsegment (35, 36) auf seiner äußeren Umfangsfläche wenigstens eine Anschlagrippung (37)) umfaßt, die dazu bestimmt ist, sich in formschlüssigen Ausnehmungen festzukeilen, die auf dem äußeren Hohlradteil (31) vorgesehen sind.

3. Hohlrad eines Untersetzungsgetriebes nach Anspruch 2,
**dadurch gekennzeichnet, daß** jede Anschlagrippung (37) eines Hohlradsegments (35, 36) in einem Dämpfer (40) aufgenommen ist, der zum äußeren Hohlradteil (31) gehört.

4. Hohlrad eines Untersetzungsgetriebes nach Anspruch 3,
**dadurch gekennzeichnet, daß** eine Anschlagrippung (37) eines Hohlradsegments (35, 36) zwischen zwei Blöcken (40) aus einem Dämpfungswerkstoff aufgenommen ist, die zwischen zwei Anschlägen (39) des äußeren Hohlradteils (31) festgekeilt sind.

5. Hohlrad eines Untersetzungsgetriebes nach Anspruch 1,
**dadurch gekennzeichnet, daß** das innere Hohlrad (33) aus zwei Segmenten (35) oder vier Segmenten (36) mit gleicher Winkelausdehnung ausgeführt ist.

6. Hohlrad eines Untersetzungsgetriebes nach Anspruch 1,
**dadurch gekennzeichnet, daß** jedes Hohlradsegment (35, 36) aus Schmiedestahl ausgeführt ist.

7. Hohlrad eines Untersetzungsgetriebes nach Anspruch 4,
**dadurch gekennzeichnet, daß** jeder Anschlag auf seiner freien Stirnfläche axial vorstehende Vorsprünge (45) umfaßt, die dazu bestimmt sind, einen Ausdehnungszwischenraum für die Dämpferblöcke (40) zu schaffen.

8. Kraftfahrzeuganlasser in der Ausführung mit Planetengetriebe, umfassend ein Hohlrad mit Innenzahnung, das drehfest im Gehäuse des Untersetzungsgetriebes gelagert ist,
**gekennzeichnet durch** das besagte Getriebehohlrad nach einem der Ansprüche 1 bis 6.

## Claims

1. A reduction gear crown wheel of the epicyclic geartrain type, especially for motor vehicle starters, which is mounted non-rotatably in a casing and which includes a set of internal teeth which mesh with the planet wheels of the reduction gear, **characterised in that** it consists of two parts, namely an outer part (31) which is mounted in the said casing, and an inner crown part (33) which carries the internal set of teeth, and which is adapted to be mounted coaxially within the outer crown part (31) and consists of a plurality of separate crown segments (35, 36).

2. A reduction gear crown wheel according to Claim 1, **characterised in that** each crown segment (35, 36) includes on its outer peripheral face at least one abutment rib (37) adapted to engage in complementary openings formed in the outer crown part (31).

3. A reduction gear crown wheel according to Claim 2, **characterised in that** each abutment rib (37) of a crown segment (35, 36) is received in a damper (40) which is part of the outer crown part (31).

4. A reduction gear crown wheel according to Claim 3, **characterised in that** an abutment rib (37) of a crown segment (35, 36) is received between two blocks (40) of a damping material, which are located between two abutment elements (39) of the outer crown part (31).

5. A reduction gear crown wheel according to Claim 1, **characterised in that** the inner crown part (33) is made in two segments (35) or four segments (36), of equal circumferential extent.

6. A reduction gear crown wheel according to Claim 1, **characterised in that** each crown segment (35, 36) is made of forged steel.

7. A reduction gear crown wheel according to Claim 4, **characterised in that** each abutment element comprises pads (45) projecting axially on its free front surface and adapted to define a space for expansion of the damper blocks (40).

8. A motor vehicle starter of the type having an epicyclic speed reducing geartrain, comprising a crown wheel with an internal set of teeth mounted non-rotatably in the body of the reduction gear, **characterised in that** the said reduction gear crown wheel is a crown wheel according to one of Claims 1 to 6.
